# EUROPEAN PATENT APPLICATION

(11) **EP 4 756 929 A1**
(43) Date of publication of application: **10.06.2026**
(21) Application number: 24851998.5
(22) Date of filing: 29.03.2024
(51) Int. Cl.: H01M 4/587, H01M 4/36, H01M 4/133, H01M 10/052, H01M 4/02

(54) **NEGATIVE ACTIVE MATERIAL AND RECHARGEABLE LITHIUM BATTERY INCLUDING SAME**

(30) Priority: 04.08.2023 KR 20230102397
(71) Applicant: SAMSUNG SDI CO., LTD., Yongin-si, Gyeonggi-do 17084 (KR)
(72) Inventor: KIM, Narae, Yongin-si, Gyeonggi-do 17084 (KR); KIM, Deok-Hyun, Yongin-si, Gyeonggi-do 17084 (KR); KIM, Youngugk, Yongin-si, Gyeonggi-do 17084 (KR)
(74) Representative: Maiwald GmbH
(86) International application number: PCT/KR2024/004086
(87) International publication number: WO 2025/033639

(57) **Abstract**

The present invention relates to negative active material and a rechargeable lithium battery including same, the negative active material including secondary particles, each of which is a spheroidized aggregate of a plurality of primary particles; tertiary natural graphite particles, each of which is an aggregate of the secondary particles, artificial graphite on surfaces of the primary and surfaces of the secondary particles, and Nb₂O₅.

## Description

### TECHNICAL FIELD

A negative active material and a rechargeable lithium battery including the same are disclosed.

### BACKGROUND ART

Recently, the rapid supplement of electronic devices such as mobile phones, laptop computers, and electric vehicles, using batteries require surprising increases in demands for rechargeable batteries with relatively high capacity and lighter weight. Particularly, a rechargeable lithium battery has recently drawn attention as a driving power source for portable devices, as it has lighter weight and high energy density. Accordingly, research and development to improve the performance of rechargeable lithium batteries is being actively conducted.

A rechargeable lithium battery includes a positive electrode and a negative electrode including an active material capable of intercalating and deintercalating lithium ions, and an electrolyte solution, and electrical energy is produced through oxidation and reduction reactions when lithium ions are intercalated/deintercalated from the positive electrode and negative electrode.

### DETAILED DESCRIPTION OF THE INVENTION

### TECHNICAL PROBLEM

An embodiment provides a negative active material exhibiting improved excellent rapid charge characteristics.

Another embodiment provides a rechargeable lithium battery including the negative active material.

### TECHNICAL SOLUTION

An embodiment provides a negative active material that includes secondary particles aggregated and spheroidized from a plurality of primary particles, tertiary particles of natural graphite aggregated from the secondary particles; and artificial graphite on surfaces of the primary particles and surfaces of the secondary particles, and includes Nb₂O₅.

Another embodiment provides a rechargeable lithium battery including a negative electrode including the negative active material; a positive electrode; and an electrolyte.

### ADVANTAGEOUS EFFECTS

The negative active material according to an embodiment may exhibit rapid charge characteristics.

### DESCRIPTION OF THE DRAWINGS

FIG. 1 is a schematic view showing the structure of a negative active material according to an embodiment.
FIG. 1A is a drawing showing a tertiary particle of natural graphite among the structures of the negative active material shown in FIG. 1.
FIG. 2 is a schematic view showing the structure of a negative active material according to another embodiment.
FIG. 3 is a schematic view showing the structure of a conventional negative active material.

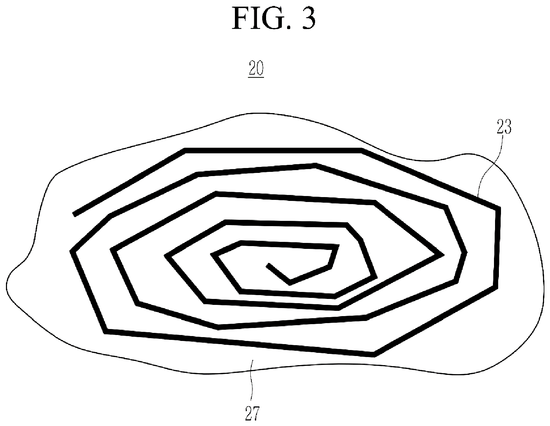

FIG. 3 is a drawing showing products in each process during the preparing process of a negative active material according to an embodiment.

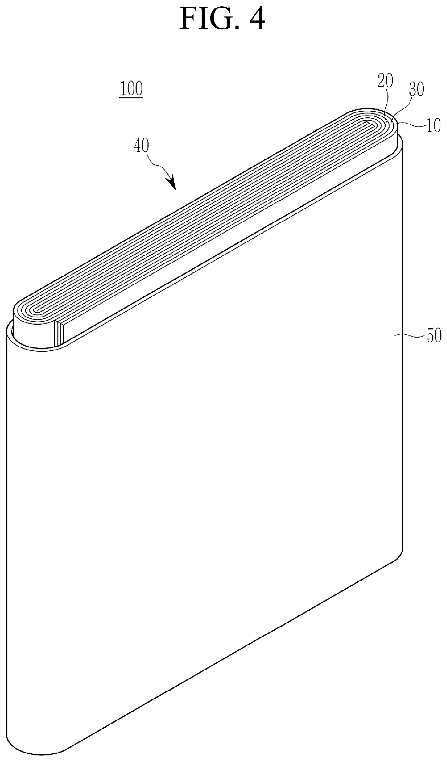

FIG. 4 is a schematic view showing a rechargeable lithium battery according to an embodiment.

### BEST MODE FOR PERFORMING INVENTION

Hereinafter, embodiments of the present invention will be described in detail. However, these embodiments are merely examples, the present invention is not limited thereto, and the present invention is defined by the scope of claims.

As used herein, when specific definition is not otherwise provided, it will be understood that when an element such as a layer, film, region, or substrate is referred to as being "on" another element, it may be directly on the other element or intervening elements may also be present.

As used herein, when specific definition is not otherwise provided, what is indicated in the singular may also include the plural. In addition, unless otherwise specified, "A or B" may mean "including A, including B, or including A and B."

In the present specification, when a definition is not otherwise provided, the particle diameter may be an average particle diameter. The particle diameter means an average particle diameter (D50), which means the diameter of particles having a cumulative volume of 50 volume% in the particle size distribution. The average particle diameter (D50) may be measured by methods well known to those skilled in the art, for example, by using a particle size analyzer, or by measuring using a transmission electron microscope (TEM) or a scanning electron microscope (SEM). Alternatively, a dynamic light-scattering measurement device is used to perform a data analysis, and the number of particles is counted for each particle size range. From this, the average particle diameter (D50) value may be easily obtained through a calculation. A laser diffraction method may also be used. When measuring by laser diffraction, more specifically, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with a power of 60 W, the average particle diameter (D50) based on 50% of the particle size distribution in the measuring device may be calculated.

A negative active material according to an embodiment includes secondary particles aggregated and spheroidized from a plurality of primary particles and tertiary particles of natural graphite aggregated from the secondary particles; and artificial graphite on surfaces of the primary particles and surfaces of the secondary particles, and includes Nb₂O₅. In an embodiment, Nb₂O₅ may be disposed on the tertiary particles of natural graphite.

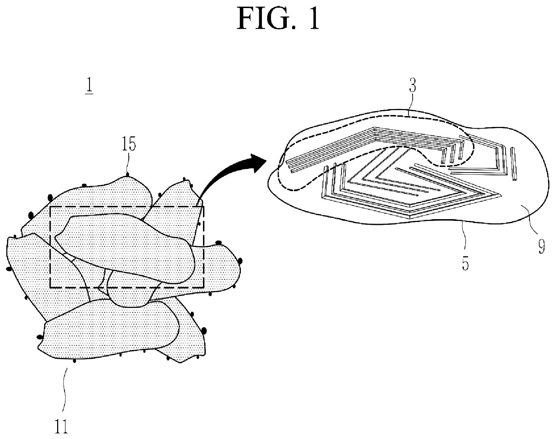

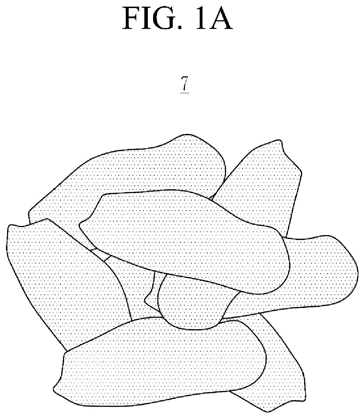

FIG. 1 is a schematic view showing the structure of such a negative active material. In FIG. 1, the right side is an enlarged view of the secondary particle 5 corresponding to the dotted line. A negative active material 1 according to an embodiment includes secondary particles 5 aggregated and spheroidized from a plurality of primary particles 3, and tertiary particles of natural graphite aggregated from the secondary particles. Additionally, the negative active material includes Nb₂O₅ 15 disposed on the tertiary particles of natural graphite. In addition, the negative active material includes artificial graphite 9 on the surfaces of the primary particles 3 and the secondary particles 5.

In addition, FIG. 1A more clearly shows the tertiary particles of natural graphite in FIG. 1.

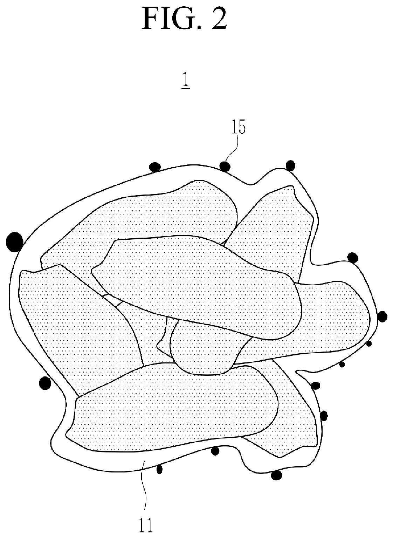

According to an embodiment, the negative active material may further include an amorphous carbon coating layer surrounding the tertiary particles of natural graphite. If the negative active material further includes an amorphous carbon coating layer, as shown in FIG. 2, Nb₂O₅ 15 may be disposed on the amorphous carbon coating layer 11.

Crystalline carbon, especially natural graphite, used as a negative active material has a higher capacity than artificial graphite, and may realize an ideal capacity close to the theoretical capacity. However, natural graphite is composed of large particles with a diameter of 40 µm to 120 µm, and is generally used as a negative active material by spheroidizing it. FIG. 3 shows the structure of a typical natural graphite negative active material 20, which includes flake natural graphite 23 and an amorphous carbon coating layer 27 on the surfaces of the flake natural graphite particles. The negative active material has limited sites for intercalation/deintercalation during charge/discharge, and thus its charge/discharge characteristics, especially high-rate charge/discharge characteristics, are not suitable.

A negative active material according to an embodiment includes secondary particles formed by aggregating and spheroidizing small primary particles of natural graphite, and tertiary particles of natural graphite formed by reaggregating the secondary particles, and includes artificial graphite on surfaces of the primary particles and surfaces of the secondary particles, thereby increasing intercalation/deintercalation sites of lithium ions and facilitating the movement of lithium ions. In addition, the negative active material according to an embodiment includes Nb₂O₅ in the tertiary particles, which is similar to a pseudo-capacitor, and which absorbs and desorbs lithium ions, and is a structurally stable material that does not cause volume expansion during charge and discharge, so that lithium ions may be quickly absorbed and desorbed during charge and discharge. The negative active material according to this embodiment may exhibit improved rapid charge/discharge characteristics. Additionally, in an embodiment, Nb₂O₅ may be disposed on the tertiary particles of natural graphite.

In an embodiment, the natural graphite may be flake-shaped natural graphite, in which case lithium intercalation may occur more actively. According to another embodiment, the flake-shaped natural graphite may be a small-particle flake-shaped natural graphite. If natural graphite is in the form of small-particle flakes, the number of sites where lithium ions may be intercalated and deintercalated within the same area increases, and the path through which lithium ions may move becomes shorter, making it more suitable for rapid charging and discharging.

In addition, because the negative active material according to an embodiment is formed by spheroidizing and bending small primary particles, lithium may be intercalated into the bent portion as well as both ends of the negative active material, particularly the flake-shaped natural graphite. In this way, the negative active material according to an embodiment has an increased number of lithium insertion sites, and thus may exhibit an improved charging rate, particularly an improved high-rate charging rate.

In an embodiment, the amount of Nb₂O₅ may be 1 wt% to 15 wt%, 2 wt% to 12 wt%, or 2 wt% to 10 wt% based on 100 wt% of the total negative active material. If the amount of the Nb₂O₅ is within the above range, the rapid charging performance may be further improved while maintaining a uniform state, thereby exhibiting excellent battery chemical characteristics.

In an embodiment, the Nb₂O₅ may have an orthorhombic structure. Nb₂O₅ with this orthorhombic structure may be referred to as T-Nb₂O₅. Nb₂O₅ having an orthorhombic structure may have an interplanar spacing of the (001) plane of 0.390 nm to 0.399 nm.

Nb₂O₅ with an orthorhombic structure may be preferable over Nb₂O₅ with a pseudohexagonal or monoclinic structure. If using Nb₂O₅ having an orthorhombic structure, lithium ions may have a passage through which they may move more quickly, thereby providing the effect of reducing volume expansion during charge and discharge and improving rate characteristics.

According to an embodiment having such a configuration, if analyzing the X-ray diffraction peaks of the negative active material (JCPDS card no. 30-0873), it may have peaks appearing at 2θ=22.7 °±0.2 °, 28.5 °±0.2 °, 36.7 °±0.2 °, 46.2 °±0.2 °, 50.9 °±0.2 °, and 55.1 °±0.2 °. 2θ=22.7 °±0.2 °, 28.5 °±0.2 °, 36.7 °±0.2 °, 46.2 °±0.2 °, 50.9 °±0.2 °, 55.1 °±0.2 ° represent the (001) plane, (180) plane, (181) plane, (002) plane, (380) plane, and (381) plane, respectively. The X-ray diffraction peak analysis may be performed using CuKα rays.

The primary particles may have a particle diameter of 4 µm to 8 µm. The particle diameter of the primary particles may be, for example, 5 µm to 8 µm, 6 µm to 8 µm, or 6 µm to 7 µm.

The secondary particles may have a particle diameter of 5 µm to 10 µm. The particle diameter of the secondary particles may be, for example, 6 µm to 10 µm, 6 µm to 8 µm, or 7 µm to 8 µm.

The tertiary particles may have a particle diameter of 9 µm to 15 µm. For example, it may be 9.2 µm to 15 µm or 9.5 µm to 15 µm.

If the particle diameter of the primary particles is 4 µm to 8 µm, preparation thereof may be easier, cycle-life characteristics may be further improved, and application to rechargeable lithium batteries may be easier. In addition, if the particle diameter of the secondary particles is 5 µm to 10 µm, tertiary particles may be better prepared and may be more easily applied to rechargeable lithium batteries. In addition, if the particle diameter of the tertiary particles is 9 µm to 15 µm, it may exhibit better initial efficiency and show excellent negative electrode charge/discharge characteristics, making it more suitable for application to rechargeable lithium batteries.

In the negative active material according to an embodiment, a thickness of the amorphous carbon coating layer may be 5 nm to 50 nm, for example, 10 nm to 50 nm or 20 nm to 50 nm. If the thickness of the amorphous carbon coating layer falls within the above range, side reactions with the electrolyte may be more effectively suppressed and charge/discharge rate characteristics may be improved.

A particle diameter of the negative active material including the primary particles, secondary particles, and tertiary particles having such particle diameters and the amorphous carbon coating layer having the thickness may be 9.05 µm to 16 µm. The particle diameter of the negative active material may be, for example, 9.05 µm to 16 µm, 9.2 µm to 15.5 µm, or 9.5 µm to 15 µm. If the particle diameter of the negative active material is within the above range, the insertion of lithium ions is easy, so that the charge rate characteristics may be improved, and excellent cycle-life characteristics may be exhibited due to the improvement in initial efficiency and negative electrode processability.

In an embodiment, the secondary particles are formed by aggregating primary particles, and the number of primary particles is not particularly limited as long as it may form secondary particles, but for example, 2 to 30, 2 to 20, 2 to 10, or 2 to 4 primary particles may be aggregated to form secondary particles. In addition, the tertiary particles are formed by aggregating secondary particles, and there is no particular limitation on the number of secondary particles as long as they may form tertiary particles. For example, 2 to 20, 2 to 10, or 2 to 4 secondary particles may be aggregated to form tertiary particles.

In an embodiment, the amount of the artificial graphite may be 6 wt% to 16.5 wt%, 6 wt% to 15 wt%, or 10 wt% to 14.5 wt% based on 100 wt% of the total negative active material. In an embodiment, because the artificial graphite is disposed on the surfaces of the primary particles and the secondary particles, if the amount of the artificial graphite is within the above range, the inside of the negative active material may be in a denser form. Because the negative active material according to an embodiment includes secondary particles in which primary particles are aggregated and spheroidized and tertiary particles in which the secondary particles are aggregated, artificial graphite is filled in spaces that may be formed between the particles, and in particular, is filled with the above amount, so that the space may be filled more sufficiently, and as a result, the inside of the final negative active material may be in a more dense form.

In an embodiment, the amount of natural graphite may be 74 wt% to 89 wt%, 80 wt% to 88.5 wt%, or 80.5 wt% to 88 wt% based on 100 wt% of the total negative active material.

In this way, the negative active material according to an embodiment may have the characteristics of high capacity, good pressing properties, and excellent pellet density due to the use of natural graphite, an improved high-rate charging rate due to increased lithium insertion sites including spherical secondary particles aggregated with small primary particles, and also the high charge rate characteristics of artificial graphite. In addition, the effect of improving the charge/discharge rate characteristics by including an amorphous carbon coating layer may also be obtained.

The amorphous carbon may be any one selected from soft carbon, hard carbon, a mesophase pitch carbonized product, calcined coke, and mixtures thereof. In an embodiment, the amount of the amorphous carbon may be 1 wt% to 5 wt% based on 100 wt% of the total negative active material.

The negative active material may have a tap density of 0.8 g/cc to 1.1 g/cc, for example, may have a tap density of 0.9 g/cc to 1.1 g/cc. If the tap density of the negative active material falls within the above range, the internal pore volume of the negative active material and the side reaction with the electrolyte are reduced, and thus cycle-life characteristics may be improved. In an embodiment, the tap density may be obtained by applying a pressure of 108 N three times using a GeoPyc 1360 Pycnometer from Micromeritics, which has a conversion factor of 0.2907 cm³/mm and a chamber having a diameter of 19.1 mm, and calculating the average value.

According to an embodiment, the negative active material may have a Hg cumulative pore volume of 0.01 mL/g to 0.07 mL/g, 0.03 mL/g to 0.07 mL/g, or 0.04 mL/g to 0.07 mL/g. If the mercury cumulative pore volume is within the above range, it means that the pores, i.e., the empty space, inside the negative active material are small. The pores measured in the pore volume may have a particle diameter of 0.01 µm to 1 µm.

If the mercury cumulative pore volume is within the above range, the amount of amorphous carbon inside the negative active material is appropriate, so that better negative active material efficiency may be obtained. In addition, if the mercury cumulative pore volume is within the above range, the inside of the negative active material may maintain a density sufficient to allow the electrolyte to be well impregnated while the area reacting with the electrolyte is not excessive, so that appropriate cycle-life characteristics may be exhibited without excessive side reactions.

In an embodiment, the mercury cumulative pore volume may be obtained by adding mercury to a negative active material, applying a pressure of 0.1 psi to 60,000 psi to pressurize the mercury into the negative active material, and then measuring the change in the volume of the mercury according to the change in pressure. The pressure change may be performed by controlling the pressure to increase from 0.1 psi to 0.2 psi to a pressure of 50,000 psi to 60,000 psi.

The negative active material may be prepared by the following method.

A pulverizing and particle size reduction process is performed to pulverize natural graphite raw materials with a particle diameter of greater than or equal to 80 µm into primary particles. The natural graphite raw material may be pulverized into primary particles by applying an airflow pulverization method. The airflow pulverization may be performed by pulverizing the natural graphite with an airflow of 5 to 20 kg/cm² at room temperature.

The natural graphite raw material may be flake-shaped natural graphite.

The pulverizing and particle size reduction process may be performed so that the particle diameter of the primary particles is 4 µm to 8 µm, for example, 4 µm to 7 µm, 4 µm to 6 µm, or 5 µm to 7 µm.

The primary particles are subjected to a spheroidization and aggregation process using spheroidization equipment to form secondary particles. The spheroidization and aggregation process may be performed so that the particle diameter of the secondary particles is 5 µm to 10 µm, for example, 6 µm to 10 µm, 6 µm to 8 µm, or 7 µm to 8 µm.

Subsequently, the secondary particles and a first amorphous carbon precursor are mixed to prepare a mixed product. This process may make the inside of the secondary particles denser.

A second amorphous carbon precursor is added to the obtained mixed product and aggregated to produce tertiary particles. The aggregation process may be performed using conventional aggregation equipment, but is not limited thereto.

The first and second amorphous carbon precursors may be the same or different, and may be any one selected from a phenol resin, a furan resin, an epoxy resin, polyacrylonitrile, a polyamide resin, a polyimide resin, a polyamideimide resin, synthetic pitch, petroleum pitch, coal pitch, tar, and a combination thereof.

Because the first and second amorphous carbon precursors are converted into crystalline carbon, that is, artificial graphite in its subsequent heat treatment process, a ratio of mixing the secondary particles with the first and second amorphous carbon precursors may be adjusted to have 10 wt% to 15 wt% of artificial graphite based on 100 wt% of the total negative active material as a final product.

According to the process, the first and second amorphous carbon precursors may be inserted into the secondary particles and disposed on the surfaces of the primary particles as well as the surfaces of the secondary particles.

The obtained tertiary particles are subjected to first heat treatment. This first heat treatment may be performed at an appropriate high temperature where the first and second amorphous carbon precursors are graphitized, for example, 2,800 °C to 3,000 °C. The first heat treatment process may be performed for 1 hour to 5 hours, for example, 1 hour to 4 hours, or 1 hour to 3 hours. According to this process, the first and second amorphous carbon precursors may be converted into artificial graphite. Accordingly, the first and second amorphous carbon precursors on the surfaces of the primary particles and the surfaces of the secondary particles may be converted to artificial graphite, which is disposed thereon.

The obtained first heat treatment product is added to a niobium precursor solution. This niobium precursor solution may be prepared by adding a niobium precursor to a solvent. This niobium precursor may include NbCl₅, niobium oxalate, or a combination thereof, and the solvent may include ethanol, methanol, dimethyl formamide, or a combination thereof. The niobium precursor solution may have a solid content of 0.01 wt% to 1 wt%, 0.01 wt% to 0.5 wt% or 0.02 wt% to 0.2 wt%. A mixing ratio of the first heat treatment product and the niobium precursor solution is adjusted to have 1 wt% to 15 wt% of Nb₂O₅ in the final negative active material.

The obtained mixture is stirred. This stirring process may be performed at 100 °C to 150, 110 °C to 140 °C, or 110 °C to 130 °C for 10 hours to 20 hours or 10 hours to 15 hours.

Subsequently, the stirred product is subjected to heat treatment to prepare the negative active material. In this heat treatment process, the niobium precursor is converted to Nb₂O₅ and then, disposed on surfaces of the tertiary particles. The heat treatment process may be performed at 500 °C to 1200 °C, 600 °C to 1000 °C, or 700 °C to 900 °C for 1 hour to 10 hours, 1 hour to 8 hours, or 1 hour to 6 hours.

After the stirring and the heat treatment, a washing process may be further performed. This washing process may be performed with alcohols such as methanol, ethanol, propanol, and the like.

The obtained first heat treatment product may be further coated with a third amorphous carbon precursor before adding the niobium precursor solution. The third amorphous carbon precursor may be a phenol resin, a furan resin, an epoxy resin, polyacrylonitrile, a polyamide resin, a polyimide resin, a polyamideimide resin, synthetic pitch, petroleum pitch, coal pitch, tar, and a combination thereof. The third amorphous carbon precursor and the first and/or second amorphous carbon precursor may be the same or different.

In the coating process, an amount of the third amorphous carbon precursor may be appropriately adjusted to form an amorphous carbon coating layer with a thickness within a range of 5 nm to 50 nm in the negative active material, a final product, without particular limitation.

The coated product is subjected to second heat treatment. The second heat treatment process may be performed at 800 °C to 2,000 °C, for example, 800 °C to 1,800 °C 800 °C to 1,600 °C 800 °C to 1,400 °C, or 1,200 °C to 1,300 °C. The second heat treatment process may be performed for 1 hour to 5 hours, 1 hour to 4 hours, or 1 hour to 3 hours.

Another embodiment provides a rechargeable lithium battery including a negative electrode, a positive electrode, and a non-aqueous electrolyte.

The negative electrode includes a negative active material layer including the negative active material according to an embodiment, a binder and optionally a conductive material, and a current collector supporting the negative active material layer.

In the negative active material layer, an amount of the negative active material may be 95 wt% to 99 wt% based on 100 wt% of the total negative active material layer.

An amount of the binder may be 1 wt% to 5 wt% based on 100 wt% of the total negative active material layer.

If the negative active material layer further includes a conductive material, an amount of the negative active material may be 90 wt% to 99 wt% based on 100 wt% of the total negative active material layer, and the amounts of the binder and the conductive material may each be 1 wt% to 5 wt% based on 100 wt% of the total negative active material layer.

The binder serves to well attach the negative active material particles to each other and also to well attach the negative active material to the current collector. The binder may be a non-aqueous binder, an aqueous binder, or a combination thereof.

The non-aqueous binder may include an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamideimide, polyimide, or a combination thereof.

The aqueous binder may include a styrene-butadiene rubber (SBR), an acrylated styrene-butadiene rubber (ABR), an acrylonitrile-butadiene rubber, an acrylic rubber, a butyl rubber, a fluorine rubber, an ethylene oxide-containing polymer, polyvinylpyrrolidone, polypropylene, polyepichlorohydrin, polyphosphazene, an ethylene propylene diene copolymer, polyvinylpyridine, chlorosulfonated polyethylene, latex, a polyester resin, an acrylic resin, a phenol resin, an epoxy resin, polyvinyl alcohol, or a combination thereof.

The negative electrode binder may also include a cellulose-based compound. Additionally, the negative electrode binder may include a cellulose-based compound and the aqueous binder together. The cellulose-based compound may be one or more of carboxymethyl cellulose, hydroxypropylmethyl cellulose, methyl cellulose, or an alkali metal salt thereof. The alkali metal may be Na, K, or Li. The cellulose-based compound may also act as a thickener that provides viscosity in addition to being a binder. Accordingly, the cellulose-based compound may be appropriately used within the amount of the binder, and there is no need to limit the amount thereof, but it may be 0.1 parts by weight to 3 parts by weight based on 100 parts by weight of the negative active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, Ketjen black, a carbon fiber, and the like; a metal-based material such as copper, nickel, aluminum silver, and the like in a form of a metal powder or a metal fiber; and a conductive polymer such as a polyphenylene derivative; or a mixture thereof.

The current collector may include one selected from a copper foil, a nickel foil, a stainless-steel foil, a titanium foil, a nickel foam, a copper foam, a polymer substrate coated with a conductive metal, and a combination thereof, but is not limited thereto.

The positive electrode includes a current collector and a positive active material layer on the current collector.

The positive active material may be a compound (lithiated intercalation compound) capable of intercalating and deintercalating lithium. Specifically, one or more of a composite oxide of lithium and a metal selected from cobalt, manganese, nickel, and a combination thereof may be used. As a more specific example, a compound represented by any one of the following chemical formulas may be used. LiaA_{1-b}X_{b}D₂ (0.90≤a≤1.8, 0≤b≤0.5); LiaA_{1-b}X_{b}O₂-_{c}D_{c} (0.90≤a≤1.8, 0≤b≤0.5, 0≤c≤0.05); LiₐE_{1-b}X_{b}O_{2-c}D_{c} (0.90≤a≤1.8, 0≤b≤0.5, 0≤c≤0.05); LiₐE2-_{b}X_{b}O₄-_{c}D_{c} (0.90≤a≤1.8, 0≤b≤0.5, 0≤c≤0.05); LiₐNi_{1-b-c}CobX_{c}D_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b}-_{c}MnbX_{c}D_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90 ≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNi_{b}Co_{c}Al_{d}GₑO₂ (0.90≤a≤1.8, 0≤b≤0.9, 0≤c≤0.5, 0≤d≤0.5, 0≤e≤0.1); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8)

In the above chemical formulae, A is Ni, Co, Mn, or a combination thereof; X is Al, Ni, Co, Mn, Cr, Fe, Mg, Sr, V, rare-earth element, or a combination thereof; D is O, F, S, P, or a combination thereof; E is Co, Mn, or a combination thereof; T is F, S, P, or a combination thereof; G is Al, Cr, Mn, Fe, Mg, La, Ce, Sr, V, or a combination thereof; Q is Ti, Mo, Mn, or a combination thereof; Z is Cr, V, Fe, Sc, Y, or a combination thereof; J is V, Cr, Mn, Co, Ni, Cu, or a combination thereof; and L¹ is Mn, Al or a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method (e.g., spray coating, dipping, etc.), but is not illustrated in more detail since it is well-known to those skilled in the related field.

In the positive electrode, an amount of the positive active material may be 90 wt% to 98 wt% based on a total weight of the positive active material layer.

In an embodiment, the positive active material layer may further include a binder and a conductive material. Herein, an amount of the binder and the conductive agent may be 1 wt% to 5 wt%, respectively, based on a total weight of the positive active material layer.

The binder serves to adhere the positive active material particles well to each other and also to adhere the positive active material well to the current collector. Examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyvinylidene fluoride-hexafluoropropylene, polyethylene, polypropylene, a styrene-butadiene rubber, an acrylated styrene-butadiene rubber, an epoxy resin, nylon, and the like, but are not limited thereto.

The conductive material is used to impart conductivity to the electrode, and any material that does not cause chemical change and conducts electrons in the battery may be used. Examples of the conductive material may be a carbon-based material such as natural graphite, artificial graphite, carbon black, acetylene black, Ketjen black, a carbon fiber, and the like; a metal-based material such as copper, nickel, aluminum silver, and the like in a form of a metal powder or a metal fiber; and a conductive polymer such as a polyphenylene derivative; or a mixture thereof.

The current collector may use Al, but is not limited thereto.

The electrolyte comprises a non-aqueous organic solvent and a lithium salt.

The non-aqueous organic solvent serves as a medium for transmitting ions taking part in the electrochemical reaction of a battery.

As the above non-aqueous organic solvent, a carbonate-based, ester-based, ether-based, ketone-based, alcohol-based, or aprotic solvent may be used.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethylacetate, methylpropionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent may include cyclohexanone, and the like. The alcohol-based solvent may include ethanol, isopropyl alcohol, and the like and the aprotic solvent may include nitriles such as R-CN (where R is a C2 to C20 linear, branched, or cyclic hydrocarbon, a double bond, an aromatic ring, or an ether bond), amides such as dimethylformamide, dioxolanes such as 1,3-dioxolane, sulfolanes, and the like.

The organic solvent may be used alone or in combination of one or more, and if using one or more in combination, the mixing ratio may be appropriately adjusted depending on the desired battery performance, which is widely understood by those working in the relevant field.

Additionally, the carbonate-based solvent, a mixture of cyclic carbonate and chain carbonate may be used. In this case, the cyclic carbonate and chain carbonate may be mixed in a volume ratio of 1:1 to 1:9 which improves the performance of the electrolyte.

The organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 1. 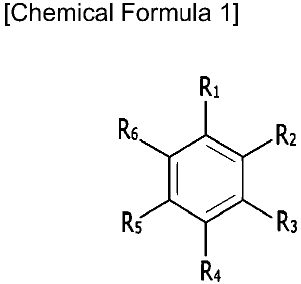 (wherein, in Chemical Formula 1, R₁ to R₆ are the same or different and are selected from hydrogen, a halogen, a C1 to C10 alkyl group, a haloalkyl group, and a combination thereof)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylethyl carbonate, vinylene carbonate or an ethylene carbonate compound of Chemical Formula 2 as a cycle-life improving additive to improve battery cycle-life. 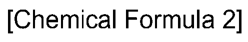 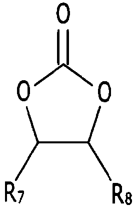 (wherein, in Chemical Formula 2, R₇ and R₈ are the same or different, and are selected from hydrogen, a halogen, a cyano group (CN), a nitro group (NO₂), and a fluorinated C1 to C5 alkyl group, provided at least one of R₇ and R₈ is a halogen, a cyano group (CN), a nitro group (NO₂), and a fluorinated C1 to C5 alkyl group, and R₇ and R₈ are not hydrogen.)

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the cycle-life improving additive may be used within an appropriate range.

The lithium salt dissolved in an organic solvent supplies a battery with lithium ions, basically operates the rechargeable lithium battery, and improves transportation of the lithium ions between positive and negative electrodes. Examples of the lithium salt may include one or two selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂) (where x and y are natural numbers, for example integers of 1 to 20), lithium difluoro(bisoxolato) phosphate, LiCl, Lil, LiB(C₂O₄)₂ (lithium bis(oxalato) borate: LiBOB), and lithium difluoro (oxalato)borate (LiDFOB), as a supporting electrolytic salt. A concentration of the lithium salt may range from about 0.1 to about 2.0 M. If the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a kind of the battery. Examples of a separator material include polyethylene, polypropylene, polyvinylidene fluoride, and multi-layers having two or more layers thereof such as a polyethylene/polypropylene double-layered separator, a polyethylene/polypropylene/polyethylene triple-layered separator, and a polypropylene/polyethylene/polypropylene triple-layered separator.

FIG. 4 shows an exploded perspective view of a rechargeable lithium battery according to an embodiment of the present invention. The rechargeable lithium battery according to an embodiment is described as being prismatic type, but the present invention is not limited thereto and may be applied to various types of batteries such as cylindrical and pouch-type.

Referring to FIG. 4, a rechargeable lithium battery 100 according to an embodiment may include an electrode assembly 40 in which a separator 30 interposed between a positive electrode 10 and a negative electrode 20 is wound, and a case 50 in which the electrode assembly 40 is housed. The positive electrode 10, the negative electrode 20, and the separator 30 may be impregnated with an electrolyte solution (not shown).

### MODE FOR PERFORMING THE INVENTION

Hereinafter, examples of the present invention and comparative examples are described. These examples, however, are not in any sense to be interpreted as limiting the scope of the invention.

### (Example 1)

A flake-shaped natural graphite raw material with a particle diameter of 80 µm to 120 µm was airjet-milled to produce small primary particles. The small primary particles were spheroidized and aggregated by using a spheroidizing equipment to produce secondary particles. The secondary particles were mixed with pitch carbon (a first amorphous carbon precursor) to prepare a mixed product.

Subsequently, pitch carbon (a second amorphous carbon precursor) was added to the mixed product and then, aggeegated to produce tertiary particles.

The obtained tertiary particles were subjected to first heat treatment at 2,800 °C for 2 hours. During this heat treatment process, the pitch carbon was all graphitized and present as artificial graphite on the surfaces of the primary and secondary particles.

An NbCl₅ solution (a solvent: ethanol, a solid content: 0.02 wt%) was added to the resulting first heat treatment product and then, stirred at 120 °C for 20 hours.

The stirred product was several times washed with ethanol and then, dried.

Subsequently, the dried product was subjected to heat treatment at 800 °C for 3 hours and then, washed with ethanol to prepare a negative active material.

The prepared negative active material included secondary particles aggregated and spheroidized from primary particles, natural graphite of tertiary particles aggregated from these secondary particles, and artificial graphite on the surfaces of the primary particles and the secondary particles and also, Nb₂O₅ on the tertiary particles.

In the preparation process, amounts of the secondary particles and the pitch carbons were adjusted to have 88 wt% of the natural graphite and 10 wt% of the artificial graphite based on 100 wt% of the final negative active material. In addition, an amount of the NbCl₅ solution was adjusted to have 2 wt% of Nb₂O₅ based on 100 wt% of the final negative active material.

The average particle diameter (D50) of the prepared primary particles, the average particle diameter (D50) of the secondary particles, the average particle diameter (D50) of the tertiary particles, and the average particle diameter (D50) and tap density of the negative active material are shown in Table 1.

97.5 wt% of the negative active material, 1.5 wt% of a styrene butadiene rubber binder, and 1 wt% of a carboxylmethyl cellulose thickener were mixed in a water solvent to prepare a negative active material slurry.

The negative active material slurry was coated on a Cu foil current collector and then, dried and compressed to manufacture a negative electrode including the current collector and a negative active material layer formed on the current collector in a conventional method.

The negative electrode was used with a lithium metal counter electrode and an electrolyte to manufacture a coin-type half-cell. The electrolyte was prepared by dissolving 1.5 M LiPF₆ in a mixed solvent of ethylene carbonate, ethylmethyl carbonate, and dimethyl carbonate (in a volume ratio of 20:10:70).

### (Example 2)

A negative active material was prepared in the same manner as in Example 1 except that the amounts of the secondary particles and the pitch carbons were adjusted to have 81 wt% of the natural graphite and 9 wt% of the artificial graphite based on 100 wt% of the negative active material, and the amount of the NbCl₅ solution was adjusted to have 10 wt% of Nb₂O₅ in the final negative active material. Except for using the negative active material, a negative electrode and a half-cell were manufactured in the same manner as in Example 1.

### (Example 3)

A negative active material was prepared in the same manner as in Example 1 except that the amounts of the secondary particles and the pitch carbons were adjusted to have 85.5 wt% of the natural graphite and 9.5 wt% of the artificial graphite based on 100 wt% of the negative active material, and the amount of the NbCl₅ solution was adjusted to have 5 wt% of Nb₂O₅ in the final negative active material. Except for using the negative active material, a negative electrode and a half-cell were manufactured in the same manner as in Example 1.

### (Example 4)

The first heat treatment product of Example 1 was additionally coated with pitch carbon and then, was subjected to second heat treatment at 1,200 °C for 2 hours.

Subsequently, an NbCl₅ solution (a solvent: ethanol, a solid content: 0.02 wt%) was added to the second heat treatment product and then, stirred at 120 °C for 20 hours.

The stirred product was several times washed with ethanol and dried.

Subsequently, the dried product was subjected to heat treatment at 800 °C for 3 hours and then, washed with ethanol to prepare a negative active material.

The prepared negative active material included secondary particles aggregated and spheroidized from primary particles, natural graphite of tertiary particles aggregated from these secondary particles, and artificial graphite on the surfaces of the primary particles and the surfaces of the secondary particles and also, an amorphous carbon coating layer (soft carbon coating layer) and Nb₂O₅ surrounding surfaces of the tertiary particles.

In the preparation process, the amounts of the secondary particles and the pitch carbons were adjusted to have 85 wt% of the natural graphite, 10 wt% of the artificial graphite, and 3 wt% of the amorphous carbon coating layer based on 100 wt% of the negative active material. In addition, the amount of the NbCl₅ solution was adjusted to have 2 wt% of Nb₂O₅ based on 100 wt% of the negative active material.

The average particle diameter (D50) of the prepared primary particles, the average particle diameter (D50) of the secondary particles, the average particle diameter (D50) of the tertiary particles, and the average particle diameter (D50) and tap density of the negative active material are shown in Table 1.

Except for using the negative active material, a negative electrode and a half-cell were manufactured in the same manner as in Example 1.

### (Example 5)

A negative active material was prepared in the same manner as in Example 2 except that the amounts of the secondary particles and the pitch carbons were adjusted to have 78 wt% of the natural graphite and 9 wt% of the artificial graphite based on 100 wt% of the negative active material, and the amount of the NbCl₅ solution was adjusted to have 10 wt% of Nb₂O₅ in the final negative active material. Except for using the negative active material, a negative electrode and a half-cell were manufactured in the same manner as in Example 1.

### (Comparative Example 1)

A flake-shaped natural graphite raw material having a particle diameter of 11 µm and an NbCl₅ solution (a solvent: ethanol, a solid content: 0.02 wt%) were added thereto and then, stirred at 120 °C for 20 hours.

The stirred product was several times washed with ethanol and then, dried.

Subsequently, the dried product was subjected to heat treatment at 800 °C for 3 hours and then, washed with ethanol to prepare a negative active material.

The prepared negative active material included a natural graphite core and Nb₂O₅ disposed on the surface of the graphite core. An amount of the NbCl₅ solution was adjusted to have 2 wt% of Nb₂O₅ in the final negative active material.

Because the negative active material of Comparative Example 1 was not in the form of secondary particles aggregated with primary particles, the average particle diameter of the negative active material alone was shown in Table 1.

**(Table 1)**

| | Average particle diameter of primary particles (D50, µm) | Average particle diameter of secondary particles (D50, µm) | Average particle diameter of tertiary particles (D50, µm) | Average particle diameter of negative active material (D50, µm) |
|---|---|---|---|---|
| Example 1 | 5 | 6.5 | 10.5 | 10.5 |
| Example 2 | 5 | 6.5 | 10.5 | 11 |
| Example 3 | 5 | 6.5 | 10.5 | 10.7 |
| Example 4 | 5 | 6.5 | 10.5 | 10.6 |
| Example 5 | 5 | 6.5 | 10.5 | 11.2 |
| Comparative Example 1 | - | - | - | 11 |

**(Table 2)**

| | Amount of natural graphite (wt%) | Amount of artificial graphite (wt%) | Amount of amorphous carbon coating layer (wt%) | Amount of Nb₂O₅ (wt%) |
|---|---|---|---|---|
| Example 1 | 88 | 10 | - | 2 |
| Example 2 | 81 | 9 | - | 10 |
| Example 3 | 85.5 | 9.5 | - | 5 |
| Example 4 | 85 | 10 | 3 | 2 |
| Example 5 | 78 | 9 | 3 | 10 |
| Comparative Example 1 | 93 | - | 5 | 2 |

### Experimental Example 1) Evaluation of X-ray Diffraction Analysis

The negative active materials according to Examples 1 to 5 and Comparative Example 1 were subjected to X-ray diffraction analysis using CuKα rays.

The X-ray diffraction analysis was performed by using X'Pert (Malvern PANalytical Ltd.) as XRD equipment but removing monochrometer equipment to improve peak intensity resolution. Herein, the measurement was performed under conditions of 2θ=20 ° to 80 °, a scan speed (°/s)=0.06436, and a step size of 0.026 °/step.

The X-ray diffraction analysis results (JCPDS card no. 30-0873) are shown in Table 3. In Table 3, if peaks appeared all at 2θ=22.7 °±0.2 °, 28.5 °±0.2 °, 36.7 °±0.2 °, 46.2 °±0.2 °, 50.9 °±0.2 °, and 55.1 °±0.2 °, O was given, but if at least one of them did not appear, X was given. The 20 = 22.7 °±0.2 °, 28.5 °±0.2 °, 36.7 °±0.2 °, 46.2 °±0.2 °, 50.9 °±0.2 °, 55.1 °±0.2 ° respectively indicate a (001) plane, a (180) plane, a (181) plane, a (002) plane, a (380) plane, and a (381) plane.

### Experimental Example 2) Evaluation of Charge Rate Characteristics

The half-cells of Examples 1 to 5 and Comparative Example 1 were once charged and discharged at 0.2 C and then, once charged and discharged at 2 C.

A ratio of 2 C charge capacity to 0.2 C charge capacity was calculated, and the results are shown as charge rate characteristics in Table 3.

### Experimental Example 3) Evaluation of Direct Current Internal Resistance (DC-IR)

The half-cells according to Examples 1 to 5 and Comparative Example 1 were once charged and discharged under a charge and discharge condition of charging under the conditions of constant current/constant voltage of 0.2 C/0.01 V, cut-off of 0.01 C, and resting of 10 minutes and then, discharging under the conditions of constant current of 0.2 C, cut-off of 1.5 V, and rest of 10 minutes at 25 °C and a voltage drop (V) was measured, while a current flew at 8 C for 10 seconds under SOC50 (a state where each battery was charged to 50% of 100% of total charge capacity, which is also 50% discharge in terms of discharge state). The measured voltage and the applied current (8 C) were used to calculate resistance, and the results are shown in DC internal resistance (DC-IR). The results are shown in Table 3.

### Experimental Example 4) Evaluation of Cycle-life Characteristics

The half-cells of Examples 1 to 5 and Comparative Example 1 were 300 times charged and discharged at 1 C at 25 °C. A ratio of 300^{th} discharge capacity to the 1^{st} discharge capacity was calculated. The results are shown as cycle-life characteristics in Table 3.

**(Table 3)**

| | XRD result | Capacity (mAh/g) | Charging rate (%) | DC-IR (Ω) | Cycle-life characteristics (%) |
|---|---|---|---|---|---|
| Example 1 | ○ | 358 | 50% | 6.3 | 92.1 |
| Example 2 | ○ | 345 | 55% | 6 | 91.4 |
| Example 3 | ○ | 353 | 60% | 6.1 | 93.4 |
| Example 4 | ○ | 356 | 51% | 6.2 | 92.5 |
| Example 5 | ○ | 343 | 56% | 5.9 | 91.8 |
| Comparative Example 1 | ○ | 356 | 28% | 8.1 | 91.0 |

As shown in Table 3, Examples 1 to 5 and Comparative Example 1 all exhibited similar X-ray diffraction analysis results. Referring to these results, Nb₂O₅ included in the negative active materials was confirmed to correspond to T-Nb₂O₅. In addition, interplanar spacing of the (001) plane of Nb₂O₅ included in the negative active materials was measured to be 0.39 nm.

As shown in Table 3, the cells of Examples 1 to 5, which used a negative active material having Nb₂O₅ on the surface of the aggregated carbon-based material, particularly, the tertiary particles, exhibited high capacity, charging rate, and cycle-life characteristics but low resistance.

On the contrary, Comparative Example 1 exhibited a very low charging rate but very high resistance.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A negative active material, comprising
secondary particles aggregated and spheroidized from a plurality of primary particles, and tertiary particles of natural graphite aggregated from the secondary particles;
artificial graphite on surfaces of the primary particles and surfaces of the secondary particles, and
Nb₂O₅.

2. The negative active material as claimed in claim 1, wherein an amount of the Nb₂O₅ is 1 wt% to 15 wt% based on 100 wt% of a total negative active material.

3. The negative active material as claimed in claim 1, wherein an amount of the Nb₂O₅ is 5 wt% to 10 wt% based on 100 wt% of a total negative active material.

4. The negative active material as claimed in claim 1, wherein the Nb₂O₅ has an orthorhombic structure.

5. The negative active material as claimed in claim 1, wherein the Nb₂O₅ has an interplanar spacing of the (001) plane of 0.390 nm to 0.399 nm.

6. The negative active material as claimed in claim 1, wherein peaks at 2θ = 22.7°±0.2°, 28.5°±0.2°, 36.7°±0.2°, 46.2°±0.2°, 50.9°±0.2°, and 55.1°±0.2° appear when analyzing X-ray diffraction peaks of the negative active material.

7. The negative active material as claimed in claim 1, wherein the Nb₂O₅ is disposed on the tertiary particles of natural graphite.

8. The negative active material as claimed in claim 1, wherein the negative active material further comprises an amorphous carbon coating layer surrounding the tertiary particles of natural graphite.

9. The negative active material as claimed in claim 1, wherein the Nb₂O₅ is disposed on the amorphous carbon coating layer.

10. The negative active material as claimed in claim 1, wherein the coating layer has a thickness of 5 nm to 50 nm.

11. The negative active material as claimed in claim 1, wherein the natural graphite is flake-shaped natural graphite.

12. The negative active material as claimed in claim 1, wherein an amount of the artificial graphite is 6 to 16.5 wt% based on 100 wt% of a total negative active material.

13. The negative active material as claimed in claim 1, wherein an amount of the natural graphite is 74 wt% to 89 wt% based on 100 wt% of a total negative active material.

14. The negative active material as claimed in claim 1, wherein the primary particles have a particle diameter of 4 µm to 8 µm.

15. The negative active material as claimed in claim 1, wherein the secondary particles have a particle diameter of 5 µm to 10 µm.

16. The negative active material as claimed in claim 1, wherein the tertiary particles have a particle diameter of 9 µm to 15 µm.

17. The negative active material as claimed in claim 1, wherein the negative active material has a tap density of 0.8 g/cc to 1.1 g/cc.

18. The negative active material as claimed in claim 1, wherein the negative active material has a mercury cumulative pore volume of 0.01 mL/g to 0.07 mL/g.

19. The negative active material as claimed in claim 1, wherein the amorphous carbon comprises soft carbon, hard carbon, a mesophase pitch carbonized product, calcined coke, and a mixture thereof.

20. A rechargeable lithium battery, comprising
a negative electrode including the negative active material of any one of claim 1 to claim 19;
a positive electrode; and
an electrolyte.
